# DEMANDE DE BREVET EUROPEEN

(11) **EP 1 197 669 A1**
(43) Date de publication de la demande: **17.04.2002**
(21) Numéro de dépôt: 01402613.2
(22) Date de dépôt: 10.10.2001
(51) Int. Cl.: F16B 5/02, F16F 1/376, B64C 1/12

(54) **Insert destiné à la fixation d'un dispositif et procédés de réalisation et de fixation de cet insert**

(30) Priorité: 12.10.2000 FR 0013056
(71) Demandeur: Atmostat Etudes et Recherches, 94800 Villejuif (FR)
(72) Inventeur: Benoit, Jean, 75010 Paris (FR)
(74) Mandataire: Ahner, Francis

(57) **Abrégé**

L'invention concerne un insert destiné à la fixation d'un dispositif, notamment un dispositif optique, électronique, électromécanique ou mécanique, sur une structure (4), notamment une structure d'avion, d'équipement spatial, de missile ou d'équipement embarqué, cet insert étant caractérisé par le fait qu'il comporte un élément externe (2), destiné à être fixé à la structure (4), un corps central (6), sur lequel le dispositif peut être maintenu, et une partie amortissante réalisée ou non dans le même matériau que l'élément externe et le corps central, cette partie amortissante étant apte à unir le corps central (6) à l'élément externe (2), tout en permettant un amortissement des déplacements du dispositif par rapport à la structure (4), et ledit matériau présentant avantageusement des propriétés non linéaires et un domaine superélastique étendu .

## Description

L'invention concerne le domaine des inserts destinés à la fixation d'équipements, tels que des dispositifs optiques, électroniques, électromécaniques ou mécaniques, sur une structure, telle qu'une structure d'avion, d'équipement spatial, de missile ou d'équipement embarqué.

Dans le domaine spatial comme dans celui de l'avionique, des missiles, des radars et des équipements embarqués, on fait appel à des structures composites, par exemple à base de carbone, sur lesquelles viennent se fixer des équipements. On utilise généralement à cette fin des inserts métalliques, par exemple en titane. Ces inserts permettent la fixation mécanique d'équipements sur des panneaux et structures composites. En effet, les peaux et les nids d'abeilles de tels panneaux et structures ne pourraient supporter une fixation directe d'équipements sur eux.

Tous ces équipements sont fortement sollicités, notamment en chocs comme en vibrations, en raison de l'environnement et des conditions de vol et / ou d'utilisations opérationnelles, telles que lors du lancement des satellites et des lanceurs, lors de la phase propulsée des missiles, lors de missions opérationnelles pour les avions d'armes ou les avions civils, etc.

Un but de l'invention est de fournir des inserts ayant des propriétés amortissantes, permettant de réduire les contraintes sur les équipements embarqués sur des avions, des missiles, des radars, des satellites, etc. au cours de leurs vols.

Ce but est atteint grâce à un insert destiné à la fixation d'un dispositif, notamment un dispositif optique, électronique, électromécanique ou mécanique, sur une structure, notamment une structure d'avion, d'équipement spatial, de missile ou d'équipement embarqué, cet insert étant caractérisé par le fait qu'il comporte un élément externe, destiné à être fixé à la structure, un corps central, sur lequel le dispositif peut être maintenu, et des moyens amortissants aptes à unir le corps central à l'élément externe, tout en permettant un amortissement des déplacements du dispositif par rapport à la structure.

En effet, l'insert selon l'invention permet non seulement la fixation d'un dispositif sur les structures mais également l'atténuation des niveaux de vibrations et ceci sans changement notable des procédés de montage d'inserts sur une structure.

Le terme insert désigne dans ce document tout élément mécanique rapporté servant d'interface de montage entre un dispositif de type optique, électronique, électromécanique ou mécanique et une structure ou une partie de structure d'avion, d'équipement spatiale, de missile ou d'équipement embarqué.

Avantageusement, l'insert est au moins en partie constitué d'un matériau possédant un domaine de déformation superélastique. En effet, dans ce domaine superélastique, on obtient par le travail du matériau, un amortissement des chocs et des vibrations et ceci principalement dans le domaine des basses fréquences.

Avantageusement, le matériau possédant un domaine de déformation superélastique peut-être, par exemple, un alliage à mémoire de forme. En effet, un tel matériau a des propriétés non linéaires. On choisira en fonction des domaines d'application, un matériau, métallique ou non, offrant des propriétés adaptées. Ainsi, un matériau possédant ces propriétés non linéaires peut être choisi dans les familles d'alliages titane - nickel, cuivre - zinc, avec éventuellement certains éléments en substitution ou en addition pour former un alliage ternaire, quaternaire, etc. Selon le traitement thermique qu'on lui fait subir, ainsi que la température de travail et la plage du domaine de superélasticité utilisée, ce type de matériau a un taux d'élongation supérieur à 10%, tout en conservant une parfaite réversibilité et des coefficients d'amortissement de quelques 10⁻², dans des bandes de fréquences de 100 à 150 Hertz.

Avantageusement les moyens amortissants forment une membrane continue entre le corps central et l'élément externe ou bien encore sont constitués de nervures.

Avantageusement ces nervures sont alors disposées de manière à privilégier l'amortissement selon au moins un axe.

L'insert peut être entièrement en matériau à propriétés non linéaires, mais avantageusement au moins deux des éléments parmi l'élément externe, le corps central et les moyens amortissants, sont constitués dans deux matériaux différents. Par exemple pour des pièces de grande dimension, seuls les moyens amortissants peuvent être réalisés dans un matériau à propriétés non linéaires et sont rapportés sur l'élément externe et le corps central par un procédé d'assemblage.

Selon un autre aspect, l'invention concerne un procédé de fixation d'un dispositif, notamment un dispositif optique, électronique, électromécanique ou mécanique, sur une structure, notamment une structure d'avion, d'équipement spatial, de missile ou d'équipement embarqué, caractérisé par le fait qu'il comprend une opération consistant à disposer, entre le dispositif et la structure, un insert comportant un élément externe, destiné à être fixé à la structure, un corps central, sur lequel le dispositif peut être maintenu, et des moyens amortissants aptes à unir le corps central à la structure externe, tout en permettant un amortissement des déplacements du dispositif par rapport à la structure.

Avantageusement, selon ce procédé, l'insert est monté sur la structure selon une orientation particulière, de manière à privilégier l'amortissement selon au moins un axe.

Selon encore un autre aspect, l'invention concerne un procédé de fabrication d'un insert destiné à la fixation d'un dispositif, notamment un dispositif optique, électronique, électromécanique ou mécanique, sur une structure, notamment une structure d'avion, d'équipement spatial, de missile ou d'équipement embarqué, ce procédé étant caractérisé par le fait que l'on réalise un élément externe, destiné à être fixé à la structure, un corps central, sur lequel le dispositif peut être maintenu, et des moyens amortissants aptes à unir le corps central à la structure externe, tout en permettant un amortissement des déplacements du dispositif par rapport à la structure.

Avantageusement, ce procédé comporte des opérations d'usinage mécanique et d'usinage par électro-érosion.

D'autres aspects, avantages et buts de l'invention apparaîtront à la lecture de la description détaillée qui suit. L'invention sera également mieux comprise à l'aide des dessins annéxés sur lesquels :
- la figure 1 représente schématiquement en coupe parallèlement à son axe de symétrie, un exemple de mode de réalisation d'un insert conforme à la présente invention ;
- la figure 2 représente une vue de dessus perpendiculairement à son axe de symétrie, l'insert représenté à la figure 1 ; et
- la figure 3 représente schématiquement en coupe, parallèlement à son axe de symétrie, un autre exemple de mode de réalisation d'un insert conforme à la présente invention.

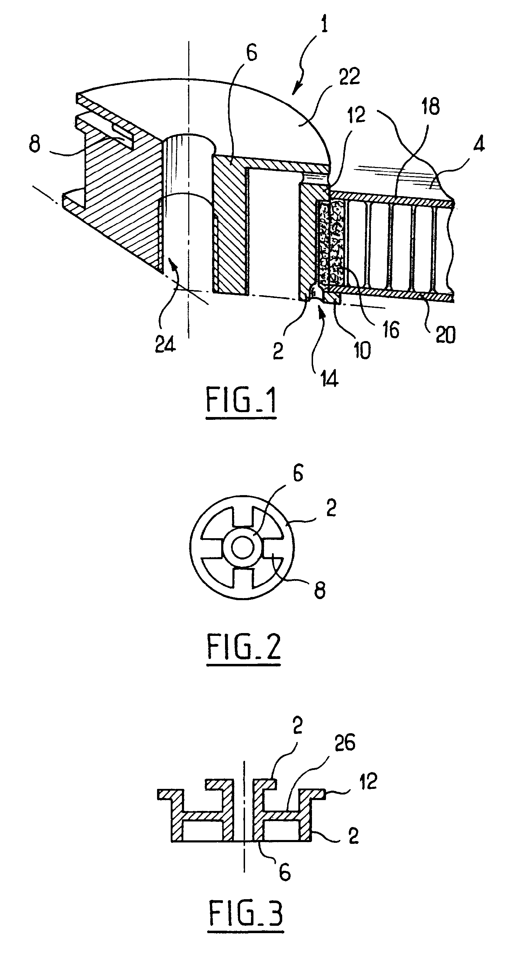

Un exemple non limitatif d'insert 1 selon l'invention est représenté sur la figure 1.

Il comporte un élément externe 2 destiné à être fixé sur une structure 4, un corps central 6 et des moyens amortissants. Selon l'exemple présenté sur la figure 1 les moyens amortissants sont constitués de quatre nervures 8 axiales. Cet insert 1 a une symétrie cylindrique.

L'élément externe 2 est formé d'un cylindre creux de révolution comportant à chacune de ses extrémités, un col 10, 12 saillant de la surface externe du cylindre et s'étendant radialement perpendiculairement à cette surface externe. Ces cols 10, 12 aident au maintien de l'insert 1 sur la structure 4. En effet, l'un des cols 10, 12 est en appui sur le bord de l'orifice réalisé dans la structure 4 et destiné à recevoir l'insert 1. Un canal 14 est formé dans l'un des cols 10, 12 afin d'injecter une colle 16, entre l'insert 1 et la structure 4, dans la constitution en nid d'abeille de la structure 4. La colle 16, une fois sèche, forme une cale bloquée d'une part par les cols 10, 12, du coté de l'insert 1 et d'autre part, par les parois 18, 20 de la structure 4.

Le corps central 6 est constitué d'un cylindre creux dont l'intérieur est fileté. Le cylindre creux du corps central 6 présente un diamètre externe inférieur au diamètre interne du cylindre formant l'élément externe 2 de manière à ménager un espace entre les deux. Ainsi le cylindre creux du corps central 6 est suspendu, dans l'élément externe 2, par les nervures 8, celles-ci s'étendant radialement entre la surface externe du cylindre creux du corps central et la surface interne du cylindre formant l'élément externe 2 et entre les cols 10, 12. Du coté de la face externe du cylindre creux du corps central 6, les nervures 8 ne sont pas liées au corps central 6, sur toute leur épaisseur (voir figure 2), afin de permettre plus de souplesse de l'insert 1 et de meilleures propriétés d'amortissement.

Le filetage intérieur au cylindre creux du corps central 6 est destiné au vissage et à la fixation d'un équipement sur la structure 4.

L'extrémité du cylindre creux du corps central 6 correspondant à la face de la structure 4 destinée à recevoir l'équipement présente un disque 22 ayant un passage central en vis à vis du filetage 24 du corps central 6.

De nombreuses variantes peuvent être envisagées à l'insert 1 décrit ci-dessus, sans sortir du cadre de l'invention.

Ainsi, au lieu des quatre nervures 8 décrites ci-dessus, l'insert 1 peut en avoir trois disposées à 120 degrés les unes des autres, ou moins, ou bien au contraire davantage.

Les nervures 8 peuvent également être remplacées par une membrane 26 (voir figure 3).

L'insert peut avoir une autre symétrie que cylindrique. L'axe de fixation de l'équipement sur l'insert 1 peut présenter des inclinaisons diverses par rapport à la structure 4.

## Revendications

1. Insert destiné à la fixation d'un dispositif, notamment un dispositif optique, électronique, électromécanique ou mécanique, sur une structure (4), notamment une structure d'avion, d'équipement spatial, de missile ou d'équipement embarqué, cet insert étant **caractérisé par le fait qu'**il comporte un élément externe (2), destiné à être fixé à la structure (4), un corps central (6), sur lequel le dispositif peut être maintenu, et des moyens amortissants aptes à unir le corps central (6) à l'élément externe (2), tout en permettant un amortissement des déplacements du dispositif par rapport à la structure (4).

2. lnsert selon la revendication 1, **caractérisé par le fait qu'**il est au moins en partie constitué d'un matériau possédant un domaine de déformation super-élastique.

3. Insert selon la revendication 2, **caractérisé par le fait que** le matériau possédant un domaine de déformation super-élastique est un alliage à mémoire de forme.

4. Insert selon la revendication 2, **caractérisé par le fait que** le matériau possédant un domaine de déformation super-élastique est compris dans la liste comprenant un alliage titane-nickel et un alliage cuivre-zinc, ce matériau possédant certains éléments en substitution ou en addition pour former un alliage ternaire ou quaternaire.

5. Insert selon l'une des revendications précédentes, **caractérisé par le fait que** les moyens amortissants forment une membrane (26) continue entre le corps central (6) et l'élément externe (2).

6. Insert selon l'une des revendications précédentes, **caractérisé par le fait que** les moyens amortissants sont constitués de nervures (8).

7. Insert selon la revendication 6, **caractérisé par le fait que** les nervures (8) sont disposées de manière à privilégier l'amortissement selon au moins un axe.

8. Insert selon l'une des revendications précédentes, **caractérisé par le fait qu'**au moins deux des éléments parmi l'élément externe (2), le corps central (6) et les moyens amortissants, sont constitués dans deux matériaux différents.

9. Procédé de fixation d'un dispositif, notamment un dispositif optique, électronique, électromécanique ou mécanique, sur une structure (4), notamment une structure d'avion, d'équipement spatial, de missile ou d'équipement embarqué, **caractérisé par le fait qu'**il comprend une opération consistant à disposer, entre le dispositif et la structure (4), un insert comportant un élément externe (2), destiné à être fixé à la structure (4), un corps central (6), sur lequel le dispositif peut être maintenu, et des moyens amortissants aptes à unir le corps central (6) à la structure externe, tout en permettant un amortissement des déplacements du dispositif par rapport à la structure (4).

10. Procédé selon la revendication 9, **caractérisé par le fait que** l'insert est monté sur la structure (4) selon une orientation particulière, de manière à privilégier l'amortissement selon au moins un axe.

11. Procédé de fabrication d'un insert destiné à la fixation d'un dispositif, notamment un dispositif optique, électronique, électromécanique ou mécanique, sur une structure (4), notamment une structure d'avion, d'équipement spatial, de missile ou d'équipement embarqué, ce procédé étant **caractérisé par le fait que** l'on réalise un élément externe, destiné à être fixé à la structure (4), un corps central (6), sur lequel le dispositif peut être maintenu, et des moyens amortissants aptes à unir le corps central (6) à la structure externe, tout en permettant un amortissement des déplacements du dispositif par rapport à la structure (4).

12. Procédé selon la revendication 11, **caractérisé par le fait qu'**il comporte des opérations d'usinage mécanique et d'usinage par électro-érosion.
